# EUROPÄISCHE PATENTSCHRIFT

(11) **EP 1 201 571 B1**
(45) Veröffentlichungstag und Bekanntmachung des Hinweises auf die Patenterteilung: **04.02.2004**
(21) Anmeldenummer: 01124638.6
(22) Anmeldetag: 16.10.2001
(51) Int. Cl.: B65G 21/20, B65G 23/44

(54) **Pratze zum Einstellen der Gurtspannung eines Förderers**
Bracket for conveyor-belt tensioning
Equerre pour régler la tension de la bande d'un convoyeur

(30) Priorität: 26.10.2000 DE 10053231
(43) Veröffentlichungstag der Anmeldung: 02.05.2002
(73) Patentinhaber: Blesinger, Thomas, 52428 Jülich (DE); Blesinger, Ludwig Stephan, 42389 Wuppertal (DE)
(72) Erfinder: Blesinger, Thomas, 52428 Jülich (DE); Blesinger, Ludwig Stephan, Dr., 42389 Wuppertal (DE); Hoeps, Carsten, Dipl.-Ing., 52428 Jülich (DE)
(74) Vertreter: Castell, Klaus, Dr.-Ing.

(56) Entgegenhaltungen:
- DE-A- 3 445 426
- DE-A- 19 644 010
- NL-C- 86 105

## Beschreibung

Die Erfindung betrifft einen an einem Fördersystem führbaren Stellklotz eines Verstellmechanismusses zur Einstellung eines Gurtlaufes an einem Fördersystem.

Damit ein Fördersystem technisch optimal arbeiten kann, muss unter anderem die Spannung des Gurtes und die Einstellung des Gurtlaufes einwandfrei eingestellt sein.

In der Druckschrift NL 86 105 C ist ein Transportband beschrieben, welches einen Gurtlauf aufweist. Das Transportband umfasst Seitenwangen, die zum einen das seitliche Gestell des Transportbandes bilden und zum anderen über den Gurtlauf hinaus gezogen sind, so dass die Seitenwangen gleichzeitig eine Seitenführung für ein mit dem Gurtlauf transportiertes Fördergut bilden. An den Seitenwangen sind darüber hinaus ein Elektromotor sowie ein Kettenrad und eine Antriebswalze verschiebbar gelagert, so dass mittels dieser Verstellmöglichkeit der Gurtlauf des Transportbandes eingestellt werden kann. Ein Einstellen des Gurtlaufes gestaltet sich jedoch als äußerst kompliziert, da beim Einstellen des Gurtlaufes nicht nur die Antriebswalze gegenüber den Seitenwangen verschoben werden muss, sondern darüber hinaus ebenfalls das Kettenrad und der Elektromotor, da die Teile mittels unterschiedlicher Antriebsketten miteinander verbunden sind.

Zur Spannung des Gurtes und zur Einstellung des Gurtlaufes werden darüber hinaus beispielsweise bei dem Fördersystem GAL 25 der Firma Geppert-Band GmbH vier Stellklötze benötigt. Mittels dieser vier Stellklötze wird der Fördergurt des Fördersystems auf die bevorstehenden Einsatzbedingungen eingestellt.

Um einen ungehinderten Transport von Fördergut sicherzustellen, ist im Seitenbereich des Fördergurtes jeweils eine Seitenführung angebracht. Jede Seitenführung ist hierbei mit zwei Haltern an dem Fördersystem befestigt. Die Halteplatten der Seitenführung sind dabei mittels Schrauben und entsprechenden Nutsteinen verstellbar in einer Profilnut des Fördersystems befestigt. Problematisch ist, dass in dieser Profilnut auch die Stellklötze zur Einstellung des Gurtlaufs geführt werden. Häufig ist die Länge der Nut kaum ausreichend, um die Stellklötze und die Seitenführung an ihr zu befestigen. Insbesondere wenn das Förderband nach einem kurzen waagerechten Lauf für einen Aufwärtstransport noch oben abgeknickt ist, ist der Platz manchmal für das Anbringen der Stellklötze und der Seitenführung extrem eng.

Da dies zu erschwerten Montagearbeiten führt, liegt der Erfindung die Aufgabe zugrunde, die Befestigung der Stellklötze und der Seitenführung zu vereinfachen.

Die der Erfindung zugrundeliegende Aufgabe wird mit einem an einem Fördersystem geführten Stellklotz eines Verstellmechanismusses zur Einstellung eines Gurtlaufes an einem Fördersystem gelöst, der einen Haltebereich aufweist, an dem eine seitliche Führung zum Führen von Fördergut anordenbar ist.

Vorteilhaft ist hierbei, dass eine Halteplatte, die bisher als ein eigenständiges Bauteil ausgebildet wurde und welche zur Befestigung einer Seitenführung benötigt wird, erfindungsgemäß in den einzelnen Stellklotz integriert ist. Dies bedeutet, dass zur Anbringung einer Seitenführung der Einsatz zusätzlicher Bauteile, wie etwa der Halteplatte mit jeweils einem Nutstein und einer entsprechenden Schraube mit Unterlegscheiben, überflüssig wird.

Durch die Verwendung der erfindungsgemäßen Stellklötze verringert sich der Montageaufwand erheblich, da weniger Bauteile zur Fixierung der Seitenführung eingesetzt werden müssen. Trotz des verringerten Material- und Montageaufwandes ist die Funktionalität einer betriebssicheren Seitenführung gewährleistet.

Es versteht sich, dass die Stellklötze auch an einem Fördersystem verbaut werden können, an dem vorerst keine Seitenführung des Fördergutes vorgesehen ist. Falls aus technischen Gründen eine solche Seitenführung jedoch temporär oder dauerhaft erforderlich wird, kann ohne zusätzliche Nachrüstkosten die Seitenführung an den Stellklötzen einfach und schnell angebracht werden.

Besonders vorteilhaft ist es, dass durch die erfindungsgemäßen Stellklötze weiterer Bauraum eingespart wird. Dies ist besonders wichtig bei dem Einsatz von kurzen Bändern oder Fördersystemen, die nach kurzer Förderstrecke eine von der Horizontalen abweichende Förderrichtung aufweisen.

Auch ist offensichtlich, dass der Stellklotz eine wesentlich bessere Optik bietet als etwa die Halteplatten der Seitenführung in Kombination mit den Stellklötzen aus dem Stand der Technik.

Dadurch, dass der Stellklotz zwei voneinander beabstandete Erhebungen aufweist, die beide gleichzeitig in die Profilnut eingreifen, ergibt sich eine wesentlich höhere Stabilität beim Halten der Seitenführungen. Dies gilt insbesondere, da der erfindungsgemäße Stellklotz nicht durch die Kräfte des Fördergutes verdreht wird, wie es bei den mit lediglich einer Schraube fixierten Halteplatten geschehen kann. Ein Verdrehen und damit ein Verschieben der Seitenführung, was in den meisten Fällen zur Funktionsbeeinträchtigung des gesamten Fördersystems führt, ist hierbei vorteilhafter Weise unterbunden.

Ein bevorzugtes Ausführungsbeispiel schlägt vor, dass der Haltebereich eine plane Fläche aufweist. Gegen diese plane Fläche lässt sich die Seitenführung verklemmen. Zur besseren Fixierung kann die plane Fläche gerändelt sein. Es ist ebenfalls möglich, die plane Fläche mit einer Gummischicht zu versehen, um eventuelle Schwingungen, die durch das Anschlagen des Fördergutes an die Seitenführung entstehen, von dem übrigen Fördersystem zumindest teilweise zu entkoppeln.

Weiterhin vorteilhaft ist es, wenn der Haltebereich eine Bohrung aufweist. Die Bohrung ist hierbei vorzugsweise als Langloch ausgebildet, sodass beispielsweise eine Schraube in vertikaler Richtung darin verschoben werden kann. Dies erlaubt es, die Seitenführung an dem jeweiligen Stellklotz vertikal zu verschieben und somit die Seitenführung horizontal auszurichten.

Es versteht sich, dass im Haltebereich des Stellklotzes die Befestigung der Seitenführung an den Stellklotz derart gestaltet sein kann, dass die Befestigung durch eine Schnellspanneinrichtung oder durch eine Steckverbindung realisiert wird.

Eine weitere Ausführungsvariante sieht vor, dass der Stellklotz im Haltebereich eine geringere Materialstärke aufweist als im Bereich des restlichen Bauteils. Durch die geringere Materialstärke gegenüber dem restlichen Stellklotz entsteht eine Kante, worauf sich die Seitenführung abstützen kann, wodurch wiederum die beiden Bauteile gegenseitig die Stabilität verstärken. Auch bei der Montage erleichtert die Kante die Arbeiten dahingehend, dass die Seitenführung als Vorjustierung an die Kante angelegt werden kann. Außerdem kann dadurch die Seitenführung in einer Achse quer zur Förderrichtung außerhalb des Förderbandes angeordnet werden. Somit steht der gesamte Bandbereich zur Förderung des Fördergutes zur Verfügung.

Besonders vorteilhaft ist es, wenn der Haltebereich die gleiche Materialbeschaffenheit aufweist wie der Stellklotz an sich. Dadurch, dass der Haltebereich aus dem selben Material besteht wie der Rest des Stellklotzes, ist es möglich, den Stellklotz unter zu Hilfenahme eines Massenfertigungsverfahrens herzustellen. Ein bevorzugtes Herstellungsverfahren ist hierbei der Kokillenguss. Der Stellklotz erhält durch dieses Herstellungsverfahren gute Festigkeitseigenschaften, eine hohe Maßgenauigkeit, eine gute Oberflächengüte und gute Konturen. Diese Vorteile wirken sich wiederum günstig auf den Montageaufwand aus, da mit präzisen Bauteilen gearbeitet werden kann, wodurch die Montage erheblich erleichtert wird. Da der Stellklotz in einer Dauerform hergestellt wird, senken sich dementsprechend die Produktionskosten.

Bei einer anderen Ausführungsvariante weist der Stellklotz quer zu seiner Längsachse eine Gewindebohrung auf. Die Gewindebohrung ist beispielsweise für eine Madenschraube vorgesehen, mit welcher der Antrieb bei fixiertem Stellklotz in horizontaler Richtung relativ zum Stellklotz verstellbar ist. Hierzu werden die Befestigungsschrauben des Antriebes gelöst. Mittels der Madenschraube wird der Antrieb nun aus seiner Ursprungslage verschoben, sodass beispielsweise der Gurtlauf gestrafft bzw. gelockert wird. Nach Justierung des Antriebes werden die Befestigungsschrauben wieder fest angezogen.

Der Stellklotz ist hierbei aus einer Aluminium-Legierung hergestellt. Somit hat der Stellklotz ein geringes Gewicht und eine hervorragende Korrosionsbeständigkeit gegenüber Witterungseinflüssen.

Durch den erfindungsgemäßen Stellklotz wird die Montage einer Seitenführung sehr stark vereinfacht. Falls eine Seitenführung benötigt wird, ist diese schnell und einfach an den Stellklotz montiert, ohne dass zusätzliches Befestigungsmaterial wie etwa Halteplatten, Nutsteine und Schrauben mit Unterlegscheiben usw. benötigt werden.

Weitere Vorteile, Ziele und Eigenschaften vorliegender Erfindung werden anhand der Beschreibung anliegender Zeichnung erläutert, in welcher beispielhaft ein Stellklotz dargestellt ist.

Es zeigt
- Figur 1: eine Vorderansicht eines Stellklotzes aus dem Stand der Technik,
- Figur 2: eine Draufsicht eines Stellklotzes aus dem Stand der Technik,
- Figur 3: eine jeweils geschnittene Seitenansicht eines Stellklotzes aus dem Stand der Technik,
- Figur 4: eine Vorderansicht auf eine Halteplatte aus dem Stand der Technik für eine Seitenführung,
- Figur 5: eine Vorderansicht eines erfindungsgemäßen Stellklotzes,
- Figur 6: eine Draufsicht eines erfindungsgemäßen Stellklotzes,
- Figur 7: eine Seitenansicht eines erfindungsgemäßen Stellklotzes,
- Figur 8: eine schematische Darstellung zweier Stellklötze und zweier Halteplatten aus dem Stand der Technik, die an einem Fördersystem angeordnet sind und
- Figur 9: zwei erfindungsgemäße Stellklötze, die an einem Fördersystem angeordnet sind.

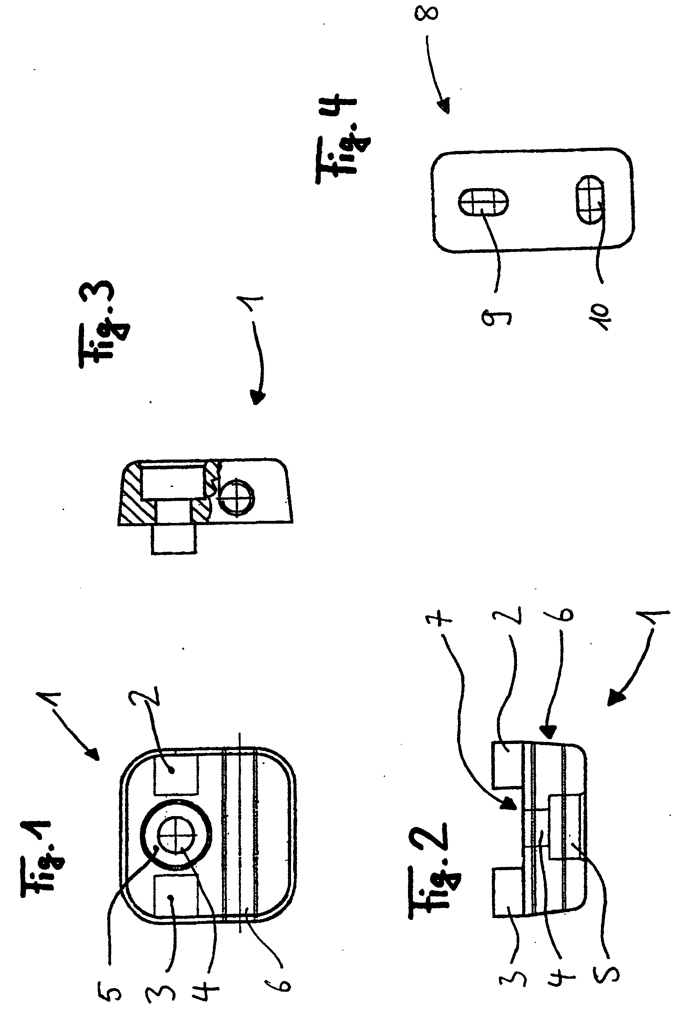

Die Figur 1 zeigt einen Stellklotz 1 in seiner bisherigen Ausführungsform. Hierbei hat der Stellklotz 1 an seiner Unterseite zwei Erhebungen 2 und 3, welche im montierten Zustand in eine Profilnut eines Fördersystems eingreifen. Der Stellklotz 1 weist auf seiner Längsachse zwischen den beiden Erhebungen 2 und 3 ein Durchgangsloch 4 und eine Sacklochbohrung 5 auf, durch welche im Montagezustand eine Zylinderschraube mit Innensechskant geführt wird. Mittels der Zylinderschraube ist der Stellklotz 1 an eine Aufnahme des Fördersystems befestigt. Des weiteren umfasst der Stellklotz 1 eine Gewindebohrung 6 für eine Madenschraube quer zu seiner Längsachse. Mittels der Madenschraube wird der Antrieb des Gurtlaufs relativ zum Stellklotz 1 in horizontaler Richtung verschoben. Unter anderem wird durch diesen Verstellmechanismus der Gurtlauf eingestellt. Hierbei ist der Stellklotz 1 gussgerecht konzipiert.

Figur 2 zeigt den Stellklotz 1 in einer Seitenansicht, wobei die beiden Erhebungen 2 und 3 auf einer Klemmfläche 7 angeordnet sind. Hierbei ist das Durchgangsloch 4 sowie die Sacklochbohrung 5 auf der Längsachse zwischen den beiden Erhebungen 2 und 3 angeordnet. Quer zum Körper des Stellklotzes 1 ist die Gewindebohrung 6 vorhanden.

Figur 3 zeigt ebenfalls den Stellklotz 1, jedoch in einer Seitenansicht.

In Figur 4 ist eine Halteplatte 8 aus dem Stand der Technik mit zwei Langlöchern 9 und 10 abgebildet. Die Langlöcher 9 und 10 ermöglichen eine vertikale und horizontale Ausrichtung des Halters 8 und dadurch der Seitenführung (hier nicht dargestellt), welche im Bereich des Langloches 9 mittels einer entsprechenden Schraube befestigt ist. Das Langloch 10 dient dabei der Durchführung einer Schraube, mit welcher der Halter 8 an einem Fördersystem geschraubt wird. Die Halteplatte 8 ist hierbei aus einem Flachstahl 25 x 5 der Stahlsorte S 235 hergestellt.

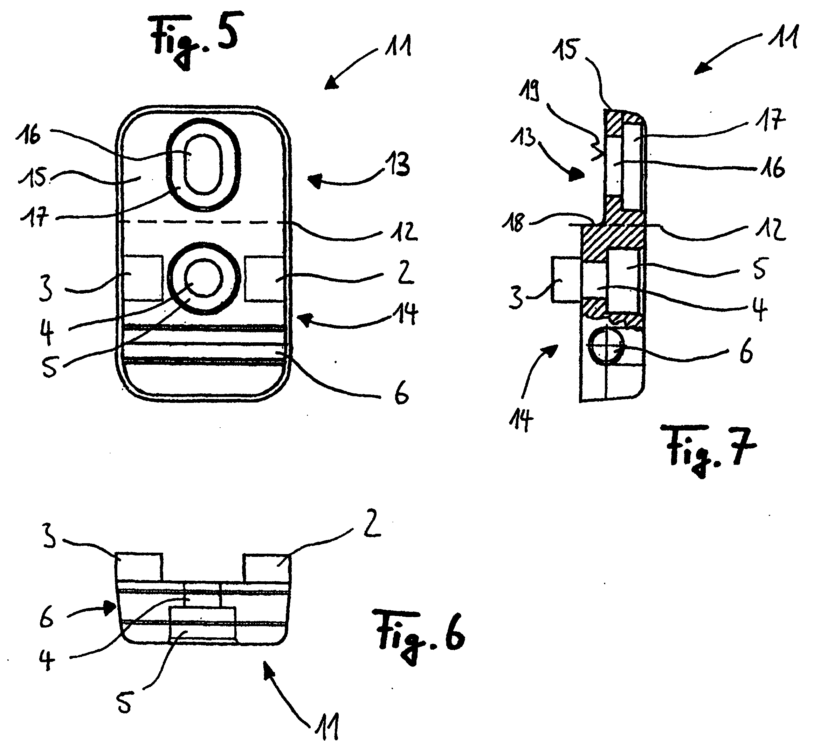

Figur 5 zeigt den erfindungsgemäßen Stellklotz 11 in einer Vorderansicht. Hierbei ist der Stellklotz 11 fiktiv durch eine zur besseren Darstellung eingezeichneten Linie 12 in zwei Bereiche 13 und 14 unterteilt.

Der Bereich 14 weist dabei die gleiche Gestalt auf, wie der in Figur 1 bis 3 beschriebene Stellklotz 1.

Der Bereich 13 kennzeichnet einen Haltebereich 15 des erfindungsgemäßen Stellklotzes 11. Hierbei umfasst der Haltebereich 15 auf seiner Längsachse ein Langloch 16 mit einer Senkung 17. Durch das Langloch 16 wird eine Zylinderschraube mit Innensechskant gesteckt, mit welcher die Seitenführung des Fördersystems an den Stellklotz 11 geschraubt wird. Die Senkung 17 dient hierbei zur Aufnahme des Schraubenkopfes der Zylinderschraube.

Der Haltebereich 15 des Stellklotzes 11 ist aus dem selben Material hergestellt wie der restliche Körper des Stellklotzes 11.

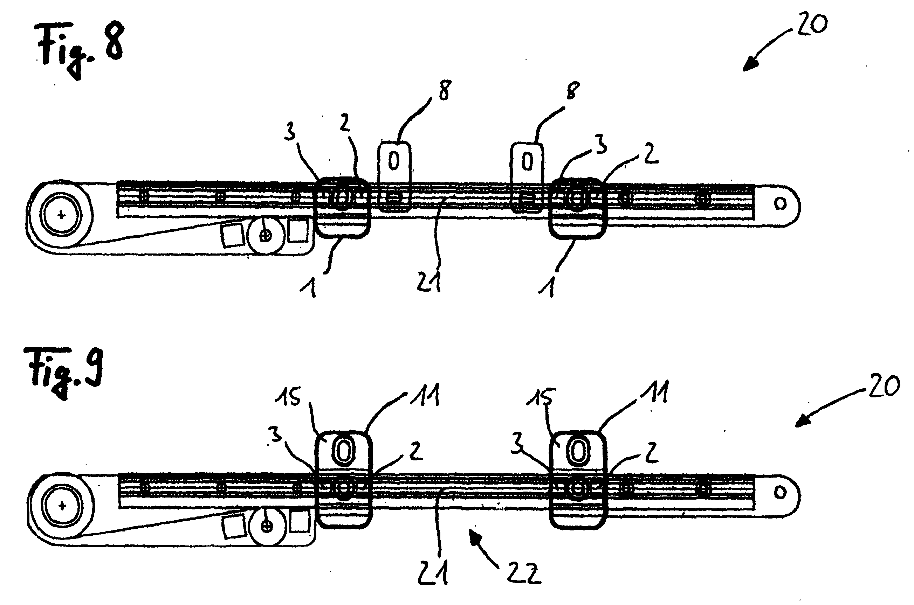

In Figur 6 ist eine Draufsicht des Stellklotzes 11 abgebildet.

Eine Seitenansicht des Stellklotzes 11 ist in Figur 7 abgebildet, wobei ein Bereich des Stellklotzes 11 als Aufbruch dargestellt ist. Im oberen Bereich 13 ist das Langloch 16 mit seiner Senkung 17 angeordnet. Hierbei weist der obere Bereich 13 eine geringere Bauteildicke auf als der untere Bereich 14 des Stellklotzes 11. Dadurch entsteht ein Überhang 18, auf dem die zu montierende Seitenführung zur Montageerleichterung abgesetzt werden kann. Die Breite des Überhangs 18 entspricht der Breite der Seitenführung, sodass die Seitenführung nicht in den Bereich oberhalb des Förderbandes hineinragt. Die Seitenführung wird durch die Innensechskantschraube, welche im Bereich des Langloches 16 angeordnet ist, gegen eine plane Fläche 19 des Haltebereiches 15 verklemmt. Der gesamte Stellklotz 11 ist mittels eines Kokillengussverfahrens aus einer Aluminiumlegierung hergestellt.

In Figur 8 ist eine schematische Anordnung von zwei Halteplatten 8 und von zwei Stellklötzen 1 in einer bisherigen Anordnung an einem Fördersystem 20 abgebildet. Hierbei übernehmen die Stellklötze 1 lediglich die Funktionen des Gurtspannens sowie der Gurtlaufeinstellung. Die Halteplatten 8 hingegen übernehmen nur die Funktion zum Halten der Seitenführung. Dabei ist die Halteplatte 8 neben dem Stellklotz 1 angeordnet. Der Stellklotz 1 ist mittels seiner Erhebungen 2 und 3 in einer Profilnut 21 angeordnet und geführt. Die Halteplatte 8 ist mittels eines separaten Nutsteins ebenfalls in der Profilnut 21 geführt.

Figur 9 zeigt an einem Fördersystem 20 angeordnete Stellklötze 11. Der erfindungsgemäße Stellklotz 11 ist hierbei mit seinen Erhebungen 2 und 3 in der Profilnut 21 angeordnet und geführt. Somit kann er die Funktion des Gurtspannens und die Funktion zur Einstellung des Gurtlaufes erfüllen. Durch den Haltebereich 15 ist an dem Stellklotz 11 zusätzlich noch die Seitenführung des Fördersystems 20 angeordnet. Dadurch, dass der Stellklotz 11 die Funktion der Halteplatten 8 übernimmt, können die Halteplatten 8 entfallen. Hierbei entsteht wesentlich mehr Bauraum im Bereich 22, was besonders vorteilhaft und wichtig bei kleinen Bandlängen ist, an denen eine Seitenführung erforderlich ist.

## Patentansprüche

1. An einem Fördersystem führbaren Stellklotz (11) eines Verstellmechanismusses zur Einstellung eines Gurtlaufes an einem Fördersystem, ***dadurch gekennzeichnet, dass*** der Stellklotz (11) einen Haltebereich (15) aufweist, an dem eine seitliche Führung zum Führen von Fördergut anordenbar ist.

2. Stellklotz (11) nach Anspruch 1, ***dadurch gekennzeichnet, dass*** der Stellklotz (11) zwei voneinander beabstandete Erhebungen (2, 3) aufweist.

3. Stellklotz (11) nach Ansprüche 1 oder 2, ***dadurch gekennzeichnet, dass*** der Haltebereich (15) eine plane Fläche (19) aufweist.

4. Stellklotz (11) nach einem der Ansprüche 1 bis 3, ***dadurch gekennzeichnet, dass*** der Haltebereich (15) eine Bohrung (16) aufweist.

5. Stellklotz (11) nach einem der Ansprüche 1 bis 4, ***dadurch gekennzeichnet, dass*** der Stellklotz (11), des Haltebereiches (15) eine geringere Materialstärke aufweist.

6. Stellklotz (11) nach einem der Ansprüche 1 bis 5, ***dadurch gekennzeichnet, dass*** der Haltebereich (15) die gleiche Materialbeschaffenheit aufweist wie der Stellklotz (11).

7. Stellklotz (11) nach einem der Ansprüche 1 bis 6, ***dadurch gekennzeichnet, dass*** der Stellklotz (11) quer zu seiner Längsachse eine Gewindebohrung (6) aufweist.

8. Stellklotz (11) nach einem der Ansprüche 1 bis 7, ***dadurch gekennzeichnet, dass*** der Stellklotz (11) aus einer Aluminium-Legierung hergestellt ist.

## Claims

1. An adjustment bracket (11) of an adjustment mechanism that is movable along a transportation system for tensioning a conveyor belt of a production transportation system, **characterized in that** the adjustment bracket (11) is furnished with a retaining area (15), to which a lateral guide for guiding products to be transported may be attached.

2. The adjustment bracket (11) according to claim 1, **characterized in that** the adjustment bracket (11) has two protrusions (2, 3) disposed at a distance from one another.

3. The adjustment bracket (11) according to claim 1 or 2, **characterized in that** the retaining area (15) has a planar surface (19) .

4. The adjustment bracket (11) according to any of claims 1 to 3, **characterized in that** the retaining area (15) is furnished with a hole (16).

5. The adjustment bracket (11) according to any of claims 1 to 4, **characterized in that** the thickness of the material from which the adjustment bracket (11) is made is reduced in the retaining area (15).

6. The adjustment bracket (11) according to any of claims 1 to 5, **characterized in that** the material from which the retaining area (15) is made is the same as that of the adjustment bracket (11).

7. The adjustment bracket (11) according to any of claims 1 to 6, **characterized in that** the adjustment bracket (11) is furnished with a threaded hole (6) perpendicular to its longitudinal axis.

8. The adjustment bracket (11) according to any of claims 1 to 7, **characterized in that** the adjustment bracket (11) is made from an aluminium alloy.

## Revendications

1. Bloc de réglage (11) pouvant être guidé sur un système de convoyage d'un mécanisme de réglage pour le réglage d'une course de sangle d'un système de convoyage, **caractérisé en ce que** le bloc de réglage (11) présente une zone de maintien (15) sur laquelle un guidage latéral pour le guidage de matériaux de convoyages est aménageable.

2. Bloc de réglage (11) selon la revendication 1, **caractérisé en ce que** le bloc de réglage (11) présente deux élévations (2, 3) à distance l'une de l'autre.

3. Bloc de réglage (11) selon l'une quelconque des revendications 1 ou 2, **caractérisé en ce que** la zone de maintien (15) présente une surface plane (19).

4. Bloc de réglage (11) selon l'une quelconque des revendications 1 à 3, **caractérisé en ce que** la zone de maintien (15) présente une forure (16).

5. Bloc de réglage (11) selon l'une quelconque des revendications 1 à 4, **caractérisé en ce que** le bloc de réglage (11) de la zone de maintien (15) présente une épaisseur de matériau moindre.

6. Bloc de réglage (11) selon l'une quelconque des revendications 1 à 5, **caractérisé en ce que** la zone de maintien (15) présente la même nature de matériau que le bloc de réglage (11).

7. Bloc de réglage (11) selon l'une quelconque des revendications 1 à 6, **caractérisé en ce que** le bloc de réglage (11) présente un taraudage (6) transversalement à son axe longitudinale.

8. Bloc de réglage (11) selon l'une quelconque des revendications 1 à 7, **caractérisé en ce que** le bloc de réglage (11) est fabriqué en un alliage d'aluminium.
